(19) Europäisches Patentamt
European Patent Office
Office européen des brevets

(11) Veröffentlichungsnummer: **0 387 690 B1**

(12) # EUROPÄISCHE PATENTSCHRIFT

(45) Veröffentlichungstag der Patentschrift: **28.06.95**

(51) Int. Cl.[6]: **C08F 4/602**, C08F 10/00

(21) Anmeldenummer: **90104401.6**

(22) Anmeldetag: **08.03.90**

Die Akte enthält technische Angaben, die nach dem Eingang der Anmeldung eingereicht wurden und die nicht in dieser Patentschrift enthalten sind.

(54) **Verfahren zur Herstellung eines syndiotaktischen Polyolefins.**

(30) Priorität: **11.03.89 DE 3907965**

(43) Veröffentlichungstag der Anmeldung:
**19.09.90 Patentblatt 90/38**

(45) Bekanntmachung des Hinweises auf die Patenterteilung:
**28.06.95 Patentblatt 95/26**

(84) Benannte Vertragsstaaten:
**BE DE ES FR GB IT NL**

(56) Entgegenhaltungen:
**EP-A- 0 351 392**

**J. AM. CHEM. SOC., Band 110, 1988, Seiten 6255-6256, American Chemical Society;J.A. EWEN et al.: "Syndiospecific propylene polymerizations with group 4metallocenes"**

(73) Patentinhaber: **HOECHST AKTIENGESELLSCHAFT**

**D-65926 Frankturt (DE)**

(72) Erfinder: **Winter, Andreas, Dr.**
**Gundelhardtstrasse 2**
**D-6233 Kelkheim/Taunus (DE)**
Erfinder: **Rohrmann, Jürgen, Dr.**
**Die Ritterwiesen 10**
**D-6237 Liederbach (DE)**
Erfinder: **Antberg, Martin, Dr.**
**Sachsenring 10**
**D-6238 Hofheim am Taunus (DE)**
Erfinder: **Dolle, Volker, Dr.**
**Hattersheimer Strasse 15**
**D-6233 Kelkheim/Taunus (DE)**
Erfinder: **Spaleck, Walter, Dr.**
**Sulzbacher Strasse 63**
**D-6237 Liederbach (DE)**

**EP 0 387 690 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung bezieht sich auf ein neues, großtechnisch einsetzbares Verfahren zur Herstellung eines syndiotaktischen Polyolefins.

Syndiotaktische Polyolefine, insbesondere syndiotaktisches Polypropylen, sind an sich bekannt. Es war bisher jedoch noch nicht möglich, derartige Polymeren bei technisch interessanten Polymerisationsbedingungen in ausreichender Ausbeute herzustellen.

So ist bekannt, syndiotaktisches Polypropylen durch Polymerisation von Propylen bei -78 °C in Gegenwart eines Katalysatorsystems bestehend aus $VCl_4$, Anisol, Heptan und Diisobutylaluminiumchlorid herzustellen (vgl. B. Lotz et al., Macromolecules 21 (1988), 2375). Der syndiotaktische Index (= 76,9 %) und die Ausbeute (= 0,16 %) sind jedoch zu niedrig.

Weiterhin ist bekannt, daß mit Hilfe eines Katalysators bestehend aus Isopropylen(cyclopentadienyl)(9-fluorenyl)zirkondichlorid oder Isopropylen(cyclopentadienyl)(9-fluorenyl)-hafniumdichlorid und einem Methylaluminoxan bei einer Temperatur von 25 bis 70 °C ein syndiotaktisches Polypropylen mit enger Molmassenverteilung in deutlich verbesserter Ausbeute erhalten werden kann (vgl. J. A. Ewen et al., J. Am. Chem. Soc., 110 (1988), 6255). Die gleichen Katalysatoren sind in EP-A- 351392 beschrieben. Allerdings ist die mittels der Zirkonverbindung erzielbare Molmasse des Polymeren noch zu niedrig und die mittels der Hafniumverbindung erreichbare Ausbeute ist nicht ausreichend für ein industrielles Verfahren. Darüber hinaus sind die erzielbaren Syndiotaxien noch verbesserungsbedürftig.

Es bestand daher die Aufgabe, ein Verfahren zu finden, welches es erlaubt, syndiotaktische Polyolefine mit hoher Molmasse, enger Molmassenverteilung und einer Syndiotaxie über 90 % in hoher Ausbeute zu erhalten.

Die Erfindung betrifft somit ein Verfahren zur Herstellung eines syndiotaktischen Polyolefins mit einer Syndiotaxie über 90 % durch Polymerisation oder Copolymerisation eines Olefins der Formel $R^aCH=CHR^b$, worin $R^a$ und $R^b$ gleich oder verschieden sind und ein Wasserstoffatom oder einen Alkylrest mit 1 bis 28 C-Atomen bedeuten, oder $R^a$ und $R^b$ mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallkomponente und einem Aluminoxan der Formel II

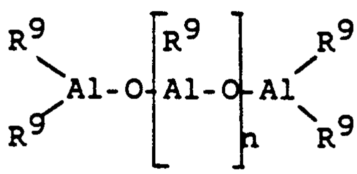

(II)

für den linearen Typ und/oder der Formel III

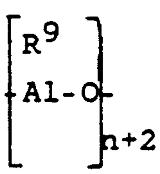

(III)

für den cyclischen Typ besteht, wobei in den Formeln II und III $R^9$ eine $C_1$-$C_6$-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente eine Verbindung der Formel I

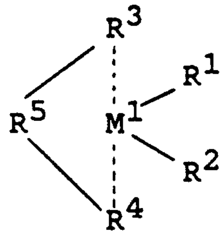

(I)

ist, worin

$M^1$ Titan, Zirkon, Vanadium, Niob oder Tantal ist,

$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,

$R^3$ und $R^4$ verschieden sind und einen ein- oder mehrkernigen Kohlenwasserstoffrest, welcher mit dem Zentralatom $M^1$ eine Sandwichstruktur bilden kann, bedeuten,

$R^5$

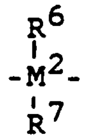 , 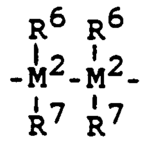 , 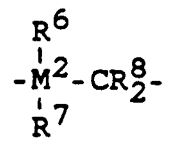 , 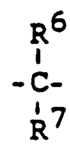 , 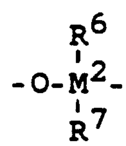 , 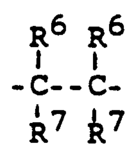 ,

= $BR^6$, = $AlR^6$, -Ge-, -Sn-, -O-, -S-, = SO, = $SO_2$, = $NR^6$, = CO, = $PR^6$ oder = P(O)-$R^6$ ist, wobei zumindest ein $R^6$ eine $C_6$-$C_{10}$-Arylgruppe eine $C_7$-$C_{40}$-Arylalkylgruppe, eine $C_8$-$C_{40}$-Arylalkenylgruppe oder eine $C_7$-$C_{40}$-Alkylarylgruppe ist, und $R^6$, $R^7$ und $R^8$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ oder $R^6$ und $R^8$ jeweils mit den sie verbindenden Atomen einen Ring bilden, und

$M^2$ Silizium, Germanium oder Zinn ist.

Der für das erfindungsgemäße Verfahren zu verwendende Katalysator besteht aus einem Aluminoxan und einem Metallocen der Formel I

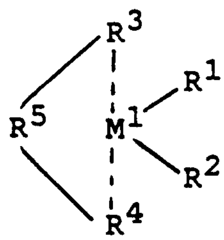

(I).

In Formel I ist $M^1$ ein Metall aus der Gruppe Titan, Zirkon, Vanadium, Niob und Tantal, vorzugsweise Zirkon.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind verschieden und bedeuten einen ein- oder mehrkernigen Kohlenwasserstoffrest, welcher mit dem Zentralatom $M^1$ eine Sandwichstruktur bilden kann.

Bevorzugt sind $R^3$ und $R^4$ Fluorenyl und Cyclopentadienyl, wobei die Grundkörper noch zusätzliche Substituenten tragen können.

$R^5$ ist eine ein- oder mehrgliedrige Brücke, welche die Reste $R^3$ und $R^4$ verknüpft und bedeutet

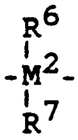 , 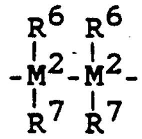 , 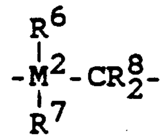 , 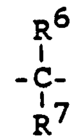 , 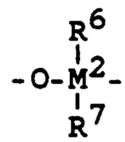 , 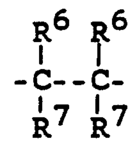 ,

$= BR^6$, $= AlR^6$, -Ge-, -Sn-, -O-, -S-, = SO, $= SO_2$, $= NR^6$, = CO, $= PR^6$ oder $= P(O)R^6$, wobei zumindest ein $R^6$ eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe ist, und $R^6$, $R^7$ und $R^8$ gleich oder verschieden sind und ein Wasserstoffatom, ein Halogenatom, vorzugsweise Chlor, eine $C_1$-$C_{10}$-, vorzugsweise $C_1$-$C_3$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{10}$-, vorzugsweise $C_6$-$C_8$-Arylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^6$ und $R^7$ oder $R^6$ und $R^8$ bilden jeweils zusammen mit den sie verbindenden Atomen einen Ring.

$M^2$ ist Silizium, Germanium oder Zinn, bevorzugt Silizium oder Germanium.

$R^5$ ist vorzugsweise $=CR^6R^7$, $=SiR^6R^7$, $=GeR^6R^7$, -O-, -S-, =SO, $=PR^6$ oder $=P(O)R^6$.

Die vorstehend beschriebenen Metallocene können nach folgendem allgemeinen Reaktionsschema hergestellt werden:

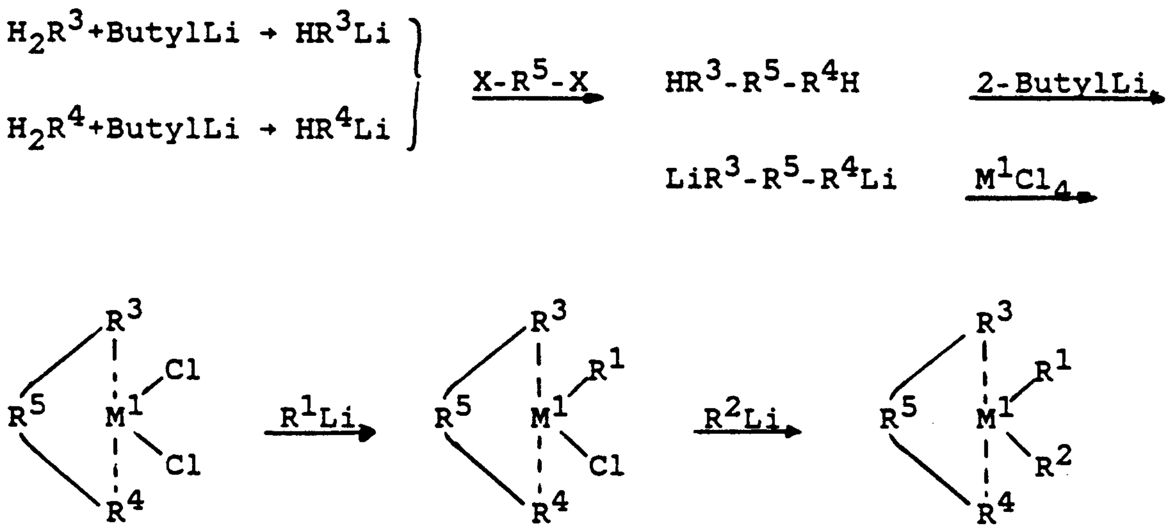


(X = Cl, Br, J, O-Tosyl)

oder

$H_2R^3$ + ButylLi → $HR^3Li$

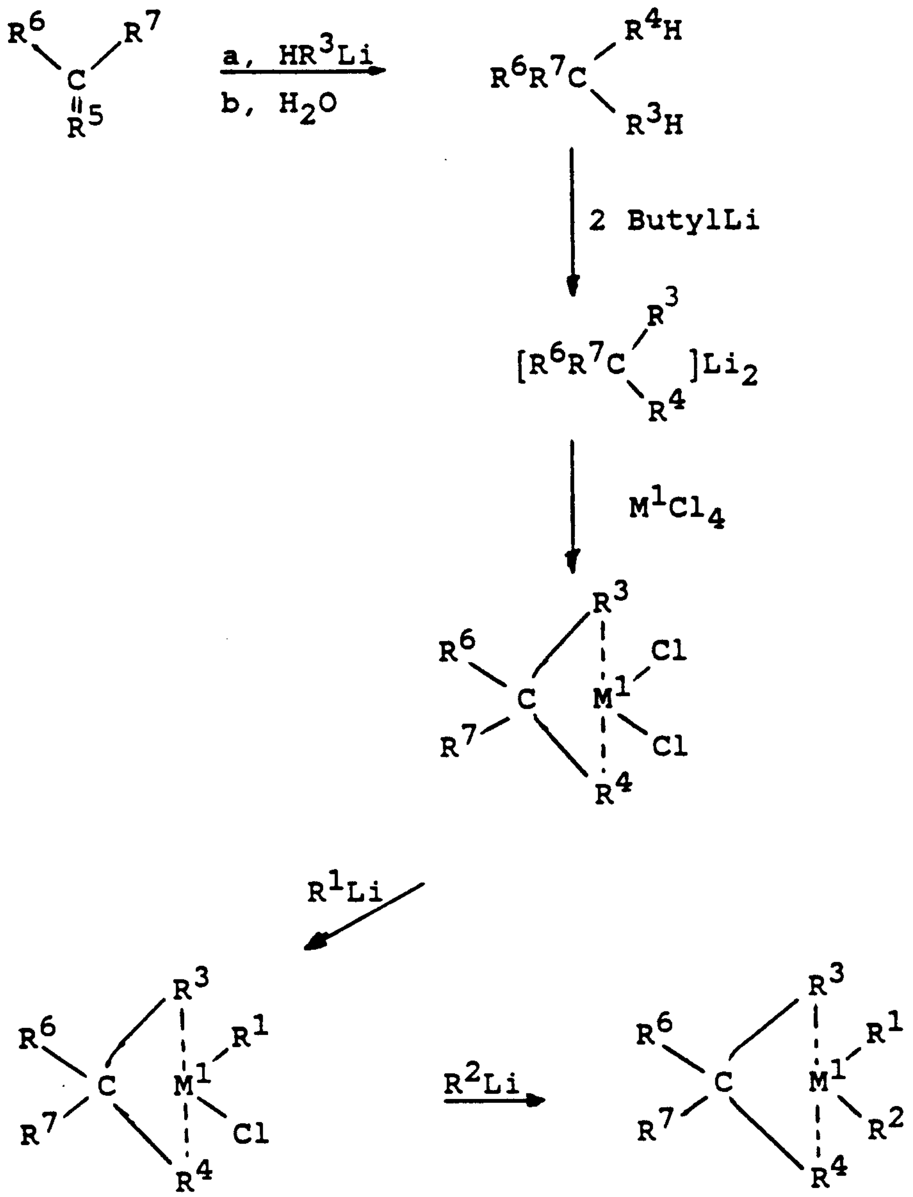


Besonders bevorzugt sind dabei (Methyl(phenyl)methylen)(9-fluorenyl)(cyclopentadienyl)zirkondichlorid sowie (Diphenylmethylen)(9-fluorenyl)(cyclopentadienyl)zirkondichlorid.

Der Cokatalysator ist ein Aluminoxan der Formel II

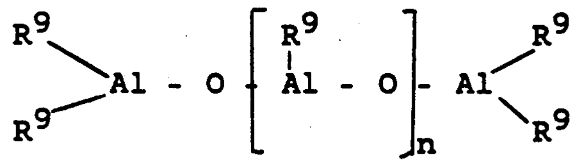

(II)

für den linearen Typ und/oder der Formel III

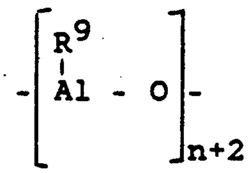 (III)

für den cyclischen Typ. In diesen Formeln bedeuten $R^9$ eine $C_1$-$C_6$-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in bekannter Weise in Lösung, in Suspension oder in der Gasphase, kontinuierlich oder diskontinuierlich, ein- oder mehrstufig bei einer Temperatur von -60 bis 200 °C, vorzugsweise -30 bis 100 °C, insbesondere 0 bis 80 °C, durchgeführt.

Der Gesamtdruck im Polymerisationssystem beträgt 0,5 bis 100 bar. Bevorzugt ist die Polymerisation in dem technisch besonders interessanten Druckbereich von 5 bis 60 bar. Monomere, deren Siedepunkt höher ist als die Polymerisationstemperatur, werden bevorzugt drucklos polymerisiert.

Dabei wird die Metallocenverbindung üblicherweise in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-5}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Polymerisiert oder copolymerisiert werden Olefine der Formel $R^aCH=CHR^b$, worin $R^a$ und $R^b$ gleich oder verschieden sind und ein Wasserstoffatom oder einen Alkylrest mit 1 bis 28 C-Atomen bedeuten, wobei $R^a$ und $R^b$ mit den sie verbindenden Atomen einen Ring bilden können. Beispiele für solche Olefine sind Ethylen, Propylen, 1-Buten, 1-Hexen, 4-Methyl-1-penten, 1-Octen, Norbornen oder Norbornadien. Bevorzugt werden Propylen, 1-Buten und 4-Methyl-1-penten.

Die Dauer der Polymerisation ist beliebig, da das erfindungsgemäß zu verwendende Katalysatorsystem einen nur geringen zeitabhängigen Abfall der Polymerisationsaktivität zeigt.

Mittels des erfindungsgemäßen Verfahrens können Polymerpulver hergestellt werden, die aus kompakten kugelförmigen Teilchen mit einer sehr engen Korngrößenverteilung und einer hohen Schüttdichte bestehen. Das Polymerpulver zeichnet sich durch eine sehr gute Rieselfähigkeit aus.

Das Polymere weist eine sehr hohe Molmasse, eine sehr enge Molmassenverteilung (Polydispersität) und eine sehr hohe Syndiotaxie auf. Aus den Polymeren hergestellte Formkörper zeichnen sich durch hohe Transparenz, Flexibilität, Reißfestigkeit und exzellenten Oberflächenglanz aus.

Durch die Verwendung speziell verbrückter Metallocene gemäß der Erfindung werden Polymere mit höherer Molmasse gebildet als bei Verwendung von Metallocenen des Standes der Technik. Gleichzeitig ist die Syndiotaxie deutlich verbessert.

Die erfindungsgemäß hergestellten Polymeren eignen sich besonders gut zur Herstellung von Folien und Hohlkörpern.

Die nachfolgenden Beispiele sollen die Erfindung erläutern.

Es bedeuten:

VZ = Viskositätszahl in $cm^3/g$

$M_w$ = Molmassengewichtsmittel in g/mol

$M_n$ = Molmassenzahlenmittel in g/mol

$M_w/M_n$ = Polydispersität

Die Molmassen wurden durch Gelpermeationschromatographie bestimmt.

SI = Syndiotaktischer Index, bestimmt durch $^{13}C$-NMR-Spektroskopie

$n_{syn}$ = mittlere syndiotaktische Blocklänge

$$(1 + \frac{2rr}{mr})$$

KDH = Kugeldruckhärte in $Nmm^{-2}$
(gemessen an ebenen Probekörpern von 4 mm Dicke nach DIN 53456/1973)

MFI = Schmelzindex (230 °C, 5 kg; DIN 53735)

Alle nachfolgenden Arbeitsoperationen der Metallocensynthese wurden unter Schutzgas unter Verwendung absolutierter Lösemittel durchgeführt.

**Beispiel 1**

(Phenyl(methyl)methylen)(9-fluorenyl)(cyclopentadienyl)zirkondichlorid

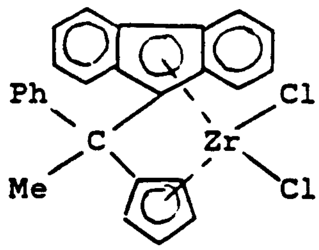

Eine Lösung von 11,4 g (67,8 mmol) 6-Methyl-6-phenyl-fulven in 40 $cm^3$ THF wurde bei Raumtemperatur mit einer Lösung von 67,8 mmol Lithiumfluoren in 50 $cm^3$ THF versetzt. Nach 2 h Rühren bei Raumtemperatur wurden 60 $cm^3$ Wasser zugesetzt. Die dabei ausgefallene Substanz wurde abgesaugt, mit Diethylether gewaschen und im Ölpumpenvakuum getrocknet. Man erhielt 19,1 g (84,2 %) 2,2-Cyclopentadienyl(9-fluorenyl)-ethylbenzol (korrekte Elementaranalysen; $^1$H-NMR-Spektrum).

10,0 g (29,9 mmol) der Verbindung wurden in 60 $cm^3$ THF gelöst und bei 0 °C mit 26 $cm^3$ (65 mmol) einer 2,5 molaren Hexan-Lösung von n-Butyllithium versetzt. Nach 15 min Rühren wurde das Lösemittel im Vakuum abgezogen. Der verbleibende dunkelrote Rückstand wurde mehrmals mit Hexan gewaschen und im Ölpumpenvakuum getrocknet. Es wurden 15,6 g des roten Dilithiosalzes als THF-Addukt erhalten; es enthielt ca. 30 % THF.

Eine Suspension von 3,48 g (14,9 mmol) $ZrCl_4$ in 70 $cm^3$ $CH_2Cl_2$ wurde bei -78 °C mit 14,9 mmol des Dilithiosalzes versetzt. Nach dem langsamen Aufwärmen auf Raumtemperatur wurde der Ansatz noch 1 h bei Raumtemperatur gerührt und über eine G4-Fritte filtriert; der Rückstand wurde mehrmals mit $CH_2Cl_2$ nachgewaschen. Das rote Filtrat wurde vollständig eingeengt und der orangerote Rückstand aus $CH_2Cl_2$ umkristallisiert. Man erhielt 1,8 g (25 %) Methylphenylmethylen-(cyclopentadienyl-9-fluorenyl)zirkondichorid als rosafarbenes Kristallpulver. $^1$H-NMR-Spektrum (100 MHz, $CDCl_3$): 7,1 - 8,25 (m, Flu-H, Ph-H), 6,90 (m, Ph-H), 6,10 - 6,50 (m, Ph-H, Cp-H), 5,90, 5,75 (2 x m, Cp-H), 2,55 (s, $CH_3$).

**Beispiel 2**

Diphenylmethylen(9-fluorenyl)(cyclopentadienyl)zirkondichlorid

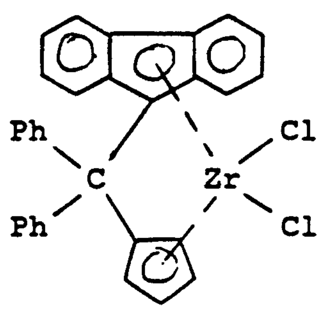

Eine Lösung von 5,10 g (30,7 mmol) Fluoren in 60 $cm^3$ THF wurde bei Raumtemperatur mit 12,3 $cm^3$ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Zur dunkelroten Lösung wurden 60 $cm^3$ Wasser zugesetzt, wobei sich die Lösung gelb färbte, und die Lösung ausgeethert. Die über $MgSO_4$ getrocknete Etherphase wurde eingeengt und bei -35 °C der Kristallisation überlassen. Man erhielt 5,1 g (42 %) 1,1-Cyclopentadienyl-(9-fluorenyl)diphenylmethan als beiges Pulver.

2,0 g (5,0 mmol) der Verbindung wurden in 20 $cm^3$ THF gelöst und bei 0 °C mit 6,4 $cm^3$ (10 mmol) einer 1,6 molaren Lösung von Butyllithium in Hexan versetzt. Nach 15 min Rühren bei Raumtemperatur

wurde das Lösemittel abgezogen, der rote Rückstand im Ölpumpenvakuum getrocknet und mehrmals mit Hexan gewaschen. Nach dem Trocknen im Ölpumpenvakuum wurde das rote Pulver bei -78 °C zu einer Suspension von 1,16 g (6,00 mmol) $ZrCl_4$ gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 $cm^3$ $CH_2Cl_2$ gewaschen,im Ölpumpenvakuum getrocknet und mit 120 $cm^3$ Toluol extrahiert. Nach Abziehen des Lösemittels und Trocknen im Ölpumpenvakuum erhielt man 0,55 g des Zirkon-Komplexes in Form eines rosaroten Kristallpulvers.

Das orangerote Filtrat des Reaktionsansatzes wurde eingeeengt und bei -35 °C der Kristallisation überlassen. Aus $CH_2Cl_2$ kristallisierten weitere 0,45 g des Komplexes. Gesamtausbeute 1,0 g (36 %). Korrekte Elementaranalysen. Das Massenspektrum zeigte $M^+$ = 556. $^1$H-NMR-Spektrum (100 MHz, $CDCl_3$); 6,90 - 8,25 (m, 16, Flu-H, Ph-H), 6,40 (m, 2, Ph-H), 6,37 (t, 2, Cp-H), 5,80 (t, 2, Cp-H).

Das Metallocen Dimethylmethylen(fluorenyl)(cyclopentadienyl)zirkondichlorid wurde in Anlehnung an die Literaturstelle J. Am. Chem. Soc. 110 (1988) 6255 hergestellt.

**Beispiel 3**

Ein trockener 16 $dm^3$-Reaktor wurde mit Stickstoff gespült und mit 10 $dm^3$ flüssigem Propylen befüllt. Dann wurden 30 $cm^3$ toluolische Methylaluminoxanlösung (entsprechend 40 mmol Al, mittlerer Oligomerisierungsgrad des Methylaluminoxans n = 20) zugegeben und der Ansatz 15 Minuten gerührt. Parallel dazu wurden 12,4 mg (0,223 mmol) Diphenylmethylen(9-fluorenyl)(cyclopentadienyl)zirkondichloridin 15 $cm^3$ toluolischer Methylaluminoxanlösung (20 mmol Al) gelöst. Nach 15 min wurde die Lösung in den Reaktor gegeben und die Polymerisationstemperatur auf 70 °C gebracht. Nach einer Polymerisationsdauer von 1 h wurde die Polymerisation beendet. Es wurden 2,19 kg Polypropylen, entsprechend einer Metallocenaktivität von 176,6 kg Polypropylen/g Metallocen x h, erhalten.
VZ = 385 $cm^3$/g; $M_w$ = 519 000, $M_n$ = 173 000, $M_w/M_n$ = 3,0; SI = 95,9 %, $n_{syn}$ = 36,7; MFI 230/5 = 0,2 dg/min.

**Beispiel 4**

Es wurde analog zu Beispiel 3 verfahren, eingesetzt wurden jedoch 11,9 mg (0,021 mmol) Diphenylmethylen(9-fluorenyl)(cyclopentadienyl)-zirkondichlorid. Die Polymerisationstemperatur betrug 60 °C und die Polymerisationsdauer betrug 1 h. Es wurden 0,95 kg Polypropylen, entsprechend einer Metallocenaktivität von 79,8 kg Polypropylen/g Metallocen x h, erhalten.
VZ = 459 $cm^3$/g; $M_w$ = 547 000, $M_n$ = 188 000, $M_w/M_n$ = 2,9; SI = 96,5 %, $n_{syn}$ = 38,4; MFI 230/5 = < 0,1 dg/min.

**Beispiel 5**

Verfahren wurde analog zu Beispiel 3, eingesetzt wurden Jedoch 18,5 mg (0,033 mmol) Diphenylmethylen(9-fluorenyl)(cyclopentadienyl)-zirkondichlorid. Die Polymerisationstemperatur betrug 50 °C und die Polymerisationsdauer 80 min.
Es wurden 0,69 kg Polypropylen, entsprechend einer Metallocenaktivität von 28,0 kg PP/g Metallocen x h, erhalten.
VZ = 565 $cm^3$/g; $M_w$ = 584 000, $M_n$ = 241 500, $M_w/M_n$ = 2,4; SI = 95,9 %, $n_{syn}$ = 36,4; MFI 230/5 = < 0,1 dg/min.

**Beispiel 6**

Es wurde analog zu Beispiel 3 verfahren, eingesetzt wurden jedoch 30,1 mg (0,054 mmol) Diphenylmethylen(9-fluorenyl)(cyclopentadienyl)-zirkondichlorid. Die Polymerisationstemperatur betrug 40 °C und die Polymerisation dauerte 1 h.
Es wurden 0,35 kg Polypropylen, entsprechend einer Metallocenaktivität von 11,6 kg PP/g Metallocen x h, erhalten.
VZ = 664 $cm^3$/g; $M_w$ = 925 000, $M_n$ = 329 000, $M_w/M_n$ = 2,8; SI = 96,7 %, $n_{syn}$ = 40,1; MFI 230/5 = < 0,1 dg/min.

**Beispiel 7**

Es wurde analog zu Beispiel 3 verfahren, eingesetzt wurden jedoch 40,0 mg (0,072 mmol) Diphenylmethylen(9-fluorenyl)(cyclopentadienyl)-zirkondichlorid. Die Polymerisationstemperatur betrug 30 °C und die Polymerisationsdauer 2 h. Es wurden 0,50 kg Polypropylen, entsprechend einer Metallocenaktivität von 6,3 kg PP/g Metallocen x h, erhalten.
VZ = 788 $cm^3$/g; $M_w$ = 1,05•$10^6$, $M_n$ = 367 000, $M_w/M_n$ = 2,8; SI = 97,1 %, $n_{syn}$ = 46,0; MFI 230/5 = < 0,1 dg/min.

**Beispiel 8**

Verfahren wurde analog zu Beispiel 3, eingesetzt wurden Jedoch 10,9 mg (0,022 mmol) Phenyl(methyl)-methylen(9-fluorenyl)(cyclopentadienyl)-zirkondichlorid. Erhalten wurden 2,05 kg Polypropylen, entsprechend einer Metallocenaktivität von 188,1 kg Polypropylen/g Metallocen x h.
VZ = 305 $cm^3$/g; $M_w$ = 435 000, $M_n$ = 181 000, $M_w/M_n$ = 2,4; SI = 96,1 %, $n_{syn}$ = 37,4; MFI 230/5 = 0,5 dg/min.

**Beispiel 9**

Es wurde analog zu Beispiel 4 verfahren, eingesetzt wurden jedoch 13,5 mg (0,027 mmol) Phenyl-(methyl)methylen(9-fluorenyl)(cyclopentadienyl)-zirkondichlorid. Es wurden 0,94 kg Polypropylen, entsprechend einer Metallocenaktivität von 69,5 kg Polypropylen/g Metallocen x h, erhalten.
VZ = 364 $cm^3$/g; $M_w$ = 490 000, $M_n$ = 188 500, $M_w/M_n$ = 2,6; SI = 97,0 %, $n_{syn}$ = 40,2; MFI 230/5 = 0,25 dg/min.

**Beispiel 10**

Es wurde analog zu Beispiel 6 verfahren, eingesetzt wurden jedoch 35,0 mg (0,071 mmol) Phenyl-(methyl)methylen(9-fluorenyl)(cyclopentadienyl)-zirkondichlorid und die Polymerisation dauerte 5 h.
Erhalten wurden 1,77 kg Polypropylen, entsprechend einer Metallocenaktivität von 10,1 kg PP/g Metallocen x h.
VZ = 545 $cm^3$/g; $M_w$ = 554 000, $M_n$ = 205 000, $M_w/M_n$ = 2,7; SI = 96,9 %, $n_{syn}$ = 39,4; MFI 230/5 = < 0,1 dg/min.

**Beispiel 11**

Es wurde analog zu Beispiel 3 verfahren, eingesetzt wurden jedoch 30 mg (0,061 mmol) Phenyl-(methyl)methylen(9-fluorenyl)(cyclopentadienyl)-zirkondichlorid, die Polymerisationstemperatur betrug 22 °C und die Polymerisationsdauer 5 h.
Es wurden 0,83 kg Polypropylen, entsprechend einer Metallocenaktivität von 5,5 kg Polypropylen/g Metallocen x h, erhalten.
VZ = 750 $cm^3$/g; $M_w$ = 925 000, $M_n$ = 330 500, $M_w/M_n$ = 2,8; SI = 98,1 %, $n_{syn}$ = 54,7; MFI 230/5 = < 0,1 dg/min.

Die Beispiele 3 bis 11 belegen, daß bei exzellenten Metallocenaktivitäten mit Zirkonocenen Molmassen der Polymeren erreicht werden können, die über denen mit den besten literaturbekannten Hafnocenen erzielten liegen.

**Beispiel 12**

Ein trockener 16 $dm^3$ Reaktor wurde mit Stickstoff gespült und mit 1,6 $Ndm^3$ (entsprechend 0,1 bar) Wasserstoff sowie mit 10 $dm^3$ flüssigem Propylen befüllt. Dann wurden 30 $cm^3$ toluolische Methylaluminoxanlösung (entsprechend 40 mmol Al, mittlerer Oligomerisierungsgrad des Methylaluminoxans n = 20) zugegeben und der Ansatz 15 min gerührt.
Parallel dazu wurden 10,3 mg (0,019 mmol) Diphenylmethylen(fluorenyl)-cyclopentadienyl)-zirkondichlorid in 15 $cm^3$ toluolischer Methylaluminoxanlösung (20 mmol Al) gelöst. Nach 15 min wurde die Lösung in den Reaktor eindosiert und die Polymerisationstemperatur auf 50 °C eingestellt.
Die Polymerisation dauerte 4 h. Es wurden 1,78 kg Polypropylen, entsprechend einer Metallocenaktivität von 43,2 kg PP/g Metallocen x h, erhalten.

VZ = 430 $cm^3/g$; $M_w$ = 434 000, $M_n$ = 179 500, $M_w/M_n$ = 2,4; SI = 96,7 %, $n_{syn}$ = 38,5.
Laut $^{13}C$-NMR weisen die Polymerketten keine ungesättigten Kettenenden auf.

**Beispiel 13**

Verfahren wurde analog zu Beispiel 12, eingesetzt wurden jedoch 40 $Ndm^3$ (entsprechend 2,5 bar) Wasserstoff und 10,7 mg (0,019 mmol) Diphenylmethylen(9-fluorenyl)(cyclopentadienyl)-zirkondichlorid. Die Polymerisation dauerte 1 h.

Erhalten wurden 1,06 kg Polypropylen, entsprechend einer Metallocenaktivität von 99,1 kg PP/g Metallocen x h.
VZ = 137 $cm^3/g$; $M_w$ = 88 700, $M_n$ = 39 400, $M_w/M_n$ = 2,3; SI = 96,9 %, $n_{syn}$ = 39,1; MFI 230/5 = 36 dg/min, KDH = 39 $Nmm^{-2}$.

Die Beispiele 12 und 13 zeigen, daß unter Verwendung von Wasserstoff die Molmasse geregelt werden kann.

**Patentansprüche**

1. Verfahren zur Herstellung eines syndiotaktischen Polyolefins mit einer Syndiotaxie über 90 % durch Polymerisation oder Copolymerisation eines Olefins der Formel $R^aCH=CHR^b$, worin $R^a$ und $R^b$ gleich oder verschieden sind und ein Wasserstoffatom oder einen Alkylrest mit 1 bis 28 C-Atomen bedeuten, wobei $R^a$ und $R^b$ mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallkomponente und einem Aluminoxan der Formel II

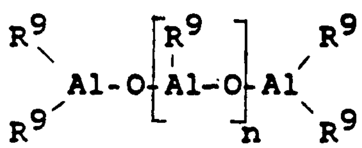

(II)

für den linearen Typ und/oder der Formel III

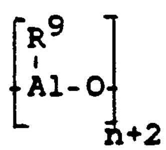

(III)

für den cyclischen Typ besteht, wobei in den Formeln II und III $R^9$ eine $C_1$-$C_6$-Alkylgruppe oder Phenyl oder Benzyl bedeutet und n eine ganze Zahl von 2 bis 50 ist, dadurch gekennzeichnet, daß als Metallocen eine Verbindung der Formel I

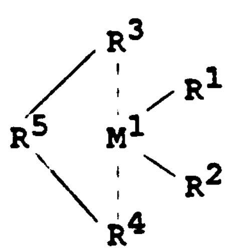

(I)

verwendet wird , worin

$M^1$ Titan, Zirkon, Vanadium, Niob oder Tantal ist,

$R^1$ und $R^2$ gleich oder verschieden sind und ein Wasserstoffatom, ein Halogenatom, eine $C_1$-$C_{10}$-

Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,

$R^3$ und $R^4$ verschieden sind und einen ein- oder mehrkernigen Kohlenwasserstoffrest, welcher mit dem Zentralatom $M^1$ eine Sandwichstruktur bilden kann, bedeuten,

$R^5$

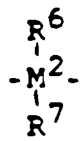 , 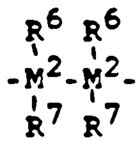 , 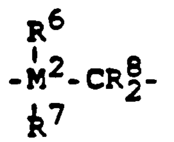 , 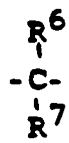 , 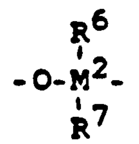 , 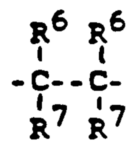 ,

= $BR^6$, = $AlR^6$, -Ge-, -Sn-, -O-, -S-, = SO, = $SO_2$, = $NR^6$, = CO, = $PR^6$ oder = P-(O)$R^6$ ist, wobei zumindest ein $R^6$ eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe ist, und $R^6$, $R^7$ und $R^8$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ oder $R^6$ und $R^8$ jeweils mit den sie verbindenden Atomen einen Ring bilden, und

$M^2$ Silizium, Germanium oder Zinn ist.

**2.** Verfahren gemäß Anspruch 1, dadurch gekennzeichnet, daß als Metallocen (Methyl(phenyl)methylen) (9-fluorenyl) (cyclopentadienyl) zirkoniumdichlorid oder (Diphenylmethylen) (9-fluorenyl) (cyclopentadienyl) zirkoniumdichlorid verwendet wird.

**3.** Verbindung der Formel I

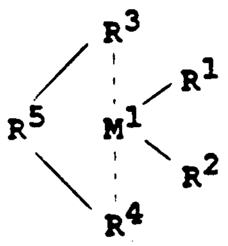 (I)

, worin

$M^1$ Titan, Zirkon, Vanadium, Niob oder Tantal ist,

$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,

$R^3$ und $R^4$ verschieden sind und einen ein- oder mehrkernigen Kohlenwasserstoffrest, welcher mit dem Zentralatom $M^1$ eine Sandwichstruktur bilden kann, bedeuten,

$R^5$

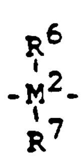 , 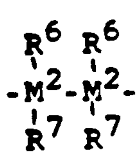 , 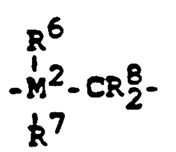 , 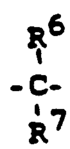 , 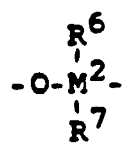 , 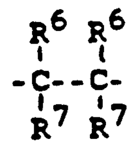 ,

= $BR^6$, = $AlR^6$, -Ge-, -Sn-, -O-, -S-, = SO, = $SO_2$, = $NR^6$, = CO, = $PR^6$ oder = P-(O)$R^6$ ist, wobei zumindest ein $R^6$ eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe ist und $R^6$, $R^7$ und $R^8$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ oder $R^6$ und $R^8$ jeweils mit den sie verbindenden Atomen einen Ring bilden, und

$M^2$ Silizium, Germanium oder Zinn ist.

**4.** (Methyl(phenyl)methylen)(9-fluorenyl)(cyclopentadienyl)zirkoniumdichlorid

**5.** (Diphenylmethylen)(9-fluorenyl)(cyclopentadienyl)zirkoniumdichlorid

## Claims

**1.** A process for the preparation of a syndiotactic polyolefin having a syndiotactic index of more than 90% by polymerization or copolymerization of an olefin of the formula $R^aCH=CHR^b$, in which $R^a$ and $R^b$ are identical or different and denote a hydrogen atom or an alkyl radical having 1 to 28 carbon atoms, where $R^a$ and $R^b$, with the atoms joining them, can form a ring, at a temperature of -60 to 200 °C under a pressure of 0.5 to 100 bar in solution, suspension or the gas phase in the presence of a catalyst which consists of a metallocene as the transition metal component and an aluminoxane of the formula II

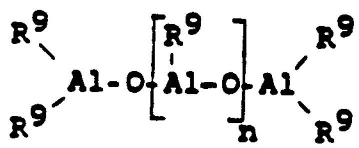

(II)

for the linear type and/or of the formula III

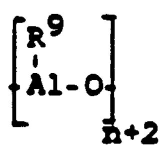

(III)

for the cyclic type, in which, in the formulae II and III, $R^9$ denotes a $C_1$-$C_6$-alkyl group or phenyl or benzyl and n is an integer from 2 to 50, which comprises using as metallocene a compound of the formula I

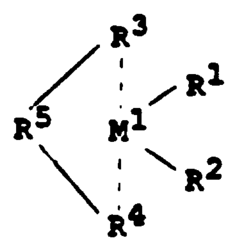

(I)

in which

$M^1$ is titanium, zirconium, vanadium, niobium or tantalum, $R^1$ and $R^2$ are identical or different and denote a hydrogen atom, a halogen atom, a $C_1$-$C_{10}$-alkylgroup, a $C_1$-$C_{10}$-alkoxy group, a $C_6$-$C_{10}$-aryl

group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group,
$R^3$ and $R^4$ are different and denote a mono- or polynuclear hydrocarbon radical which can form a sandwich structure with the central atom $M^1$,
$R^5$ is

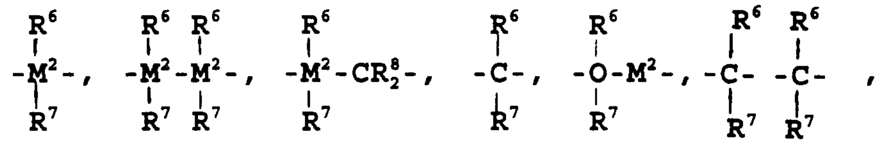

= $BR^6$, = $AlR^6$, -Ge-, -Sn-, -O-, -S-, = SO, = $SO_2$, = $NR^6$, = CO, = $PR^6$ or = $P(O)R^6$, where at least one $R^6$ is a $C_6$-$C_{10}$-aryl group, a $C_7$-$C_{40}$-arylalkyl group, a $C_8$-$C_{40}$-arylalkenyl group or a $C_7$-$C_{40}$-alkylaryl group, and $R^6$, $R^7$ and $R^8$ are identical or different and denote a hydrogen atom, a halogen atom, a $C_1$-$C_{10}$-alkyl group, a $C_1$-$C_{10}$-fluoroalkyl group, a $C_6$-$C_{10}$-fluoroaryl group, a $C_6$-$C_{10}$-aryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^6$ and $R^7$ or $R^6$ and $R^8$, in each case with the atoms joining them, form a ring, and
$M^2$ is silicon, germanium or tin.

2. The process as claimed in claim 1, wherein the metallocene used is (methyl(phenyl)methylene)(9-fluorenyl)(cyclopentadienyl)zirconium dichloride or (diphenylmethylene)(9-fluorenyl)(cyclopentadienyl)-zirconium dichloride.

3. A compound of the formula I

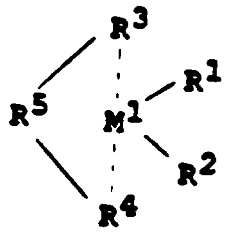

(I)

in which
$M^1$ is titanium, zirconium, vanadium, niobium or tantalum, $R^1$ and $R^2$ are identical or different and denote a hydrogen atom, a halogen atom, a $C_1$-$C_{10}$-alkylgroup, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group,
$R^3$ and $R^4$ are different and denote a mono- or polynuclear hydrocarbon radical which can form a sandwich structure with the central atom $M^1$,
$R^5$ is

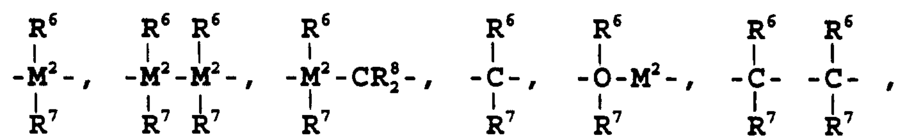

= $BR^6$, = $AlR^6$, -Ge-, -Sn-, -O-, -S-, = SO, = $SO_2$, = $NR^6$, = CO, = $PR^6$ or = $P(O)R^6$, where at least one $R^6$ is a $C_6$-$C_{10}$-aryl group, a $C_7$-$C_{40}$-arylalkyl group, a $C_8$-$C_{40}$-arylalkenyl group or a $C_7$-$C_{40}$-alkylaryl group, and $R^6$, $R^7$ and $R^8$ are identical or different and denote a hydrogen atom, a halogen atom, a $C_1$-$C_{10}$-alkyl group, a $C_1$-$C_{10}$-fluoroalkyl group, a $C_6$-$C_{10}$-fluoroaryl group, a $C_6$-$C_{10}$-aryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or

a $C_7$-$C_{40}$-alkylaryl group, or $R^6$ and $R^7$ or $R^6$ and $R^8$, in each case with the atoms joining them, form a ring, and
$M^2$ is silicon, germanium or tin.

**4.** (Methyl(phenyl)methylene)(9-fluorenyl)(cyclopentadienyl)zirconium dichloride.

**5.** (Diphenylmethylene)(9-fluorenyl)(cyclopentadienyl)zirconium dichloride.

## Revendications

**1.** Procédé de préparation d'une polyoléfine syndiotactique ayant une configuration syndiotactique supérieure à 90 % par polymérisation ou copolymérisation d'une oléfine de formule $R^aCH=CHR^b$, dans laquelle $R^a$ et $R^b$ sont identiques ou différents et représentent un atome d'hydrogène ou un reste alkyle de 1 à 28 atomes de carbone, $R^a$ et $R^b$ pouvant former un cycle avec les atomes auxquels ils sont liés, à une température de -60 à 200 °C, sous une pression de 0,5 à 100 bars, en solution, en suspension ou en phase gazeuse, en présence d'un catalyseur constitué d'un métallocène comme constituant de métal de transition et d'un aluminoxane de formule II

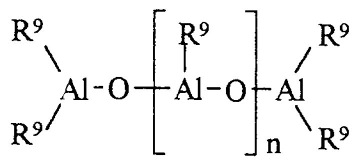

(II)

en ce qui concerne le type linéaire, et/ou de formule III

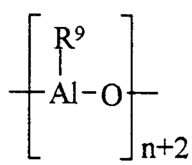

(III)

en ce qui concerne le type cyclique, $R^9$ représentant dans les formules II et III un groupe alkyle en $C_1$-$C_6$ ou un groupe phényle ou benzyle, et n étant un nombre entier de 2 à 50, caractérisé en ce que l'on utilise comme métallocène un composé de formule I

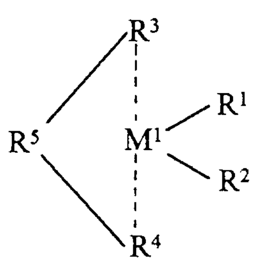

(I)

dans laquelle

$M^1$ représente le titane, le zirconium, le vanadium, le niobium ou le tantale,

$R^1$ et $R^2$ sont identiques ou différents et représentent chacun un atome d'hydrogène, un atome d'halogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$ ou un groupe arylalcényle en $C_8$-$C_{40}$,

$R^3$ et $R^4$ sont différents et représentent des restes hydrocarbonés mono- ou polycycliques qui peuvent former avec l'atome central $M^1$ une structure en sandwich,

$R^5$ représente un groupe

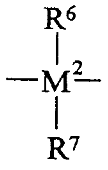 , 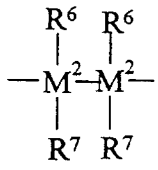 , 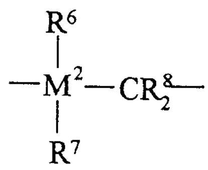 , 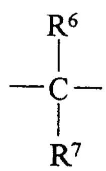 , 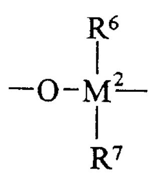 , 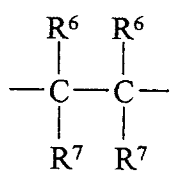 ,

$=BR^6$, $=AlR^6$, -Ge-, -Sn-, -O-, -S-, $=SO$, $=SO_2$, $=NR^6$, $=CO$, $=PR^6$ ou $=P(O)R^6$, où au moins l'un des $R^6$ est un groupe aryle en $C_6$-$C_{10}$, un groupe arylalkyle en $C_7$-$C_{40}$, un groupe arylalcényle en $C_8$-$C_{40}$ ou un groupe alkylaryle en $C_7$-$C_{40}$, et $R^6$, $R^7$ et $R^8$ sont identiques ou différents et représentent un atome d'hydrogène, un atome d'halogène, un groupe alkyle en $C_1$-$C_{10}$, un groupe fluoroalkyle en $C_1$-$C_{10}$, un groupe fluoroaryle en $C_6$-$C_{10}$, un groupe aryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$ ou un groupe alkylaryle en $C_7$-$C_{40}$, ou $R^6$ et $R^7$ ou $R^6$ et $R^8$ forment respectivement un cycle avec les atomes auxquels ils sont liés, et

$M^2$ est le silicium, le germanium ou l'étain.

**2.** Procédé selon la revendication 1, caractérisé en ce que l'on utilise comme métallocène le dichlorure de (méthyl(phényl)méthylène)(9-fluorényl)(cyclopentadiényl)zirconium ou le dichlorure de (diphénylméthylène)(9-fluorényl)(cyclopentadiényl)zirconium.

**3.** Composé de formule I

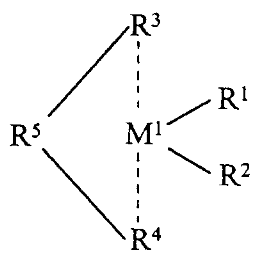 (I)

dans laquelle

$M^1$ représente le titane, le zirconium, le vanadium, le niobium ou le tantale,

$R^1$ et $R^2$ sont identiques ou différents et représentent chacun un atome d'hydrogène, un atome d'halogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$ ou un groupe arylalcényle en $C_8$-$C_{40}$,

$R^3$ et $R^4$ sont différents et représentent des restes hydrocarbonés mono- ou polycycliques qui peuvent former avec l'atome central $M^1$ une structure en sandwich,

$R^5$ représente un groupe

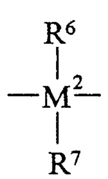 , 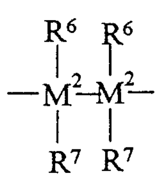 , 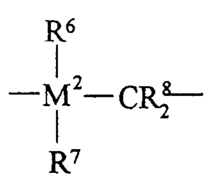 , 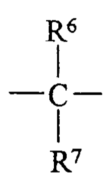 , 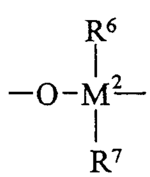 , 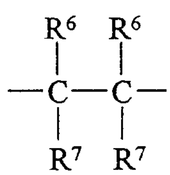 ,

$=BR^6$, $=AlR^6$, -Ge-, -Sn-, -O-, -S-, $=SO$, $=SO_2$, $=NR^6$, $=CO$, $=PR^6$ ou $=P(O)R^6$, où au moins l'un des $R^6$ est un groupe aryle en $C_6$-$C_{10}$, un groupe arylalkyle en $C_7$-$C_{40}$,

un groupe arylalcényle en $C_8$-$C_{40}$ ou un groupe alkylaryle en $C_7$-$C_{40}$, et $R^6$, $R^7$ et $R^8$ sont identiques ou différents et représentent un atome d'hydrogène, un atome d'halogène, un groupe alkyle en $C_1$-$C_{10}$, un groupe fluoroalkyle en $C_1$-$C_{10}$, un groupe fluoroaryle en $C_6$-$C_{10}$, un groupe aryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$ ou un groupe alkylaryle en $C_7$-$C_{40}$, ou $R^6$ et $R^7$ ou $R^6$ et $R^8$ forment respectivement un cycle avec les atomes auxquels ils sont liés, et

$M^2$ est le silicium, le germanium ou l'étain.

**4.** Dichlorure de (méthyl(phényl)méthylène)(9-fluorényl)(cyclopentadiényl)zirconium.

**5.** Dichlorure de (diphénylméthylène)(9-fluorényl)(cyclopentadiényl)zirconium.